# EUROPÄISCHE PATENTSCHRIFT

(11) **EP 1 608 905 B1**
(45) Veröffentlichungstag und Bekanntmachung des Hinweises auf die Patenterteilung: **14.11.2007**
(21) Anmeldenummer: 04722229.4
(22) Anmeldetag: 22.03.2004
(51) Int. Cl.: F16L 17/10

(54) **VERFAHREN UND DICHTUNGSELEMENT ZUM ABDICHTEN VON ROHR- UND KANALSYSTEMEN, ROHRDURCHFÜHRUNGEN, BAUWERKEN UND DGL.**
METHOD AND SEALING ELEMENT FOR SEALING PIPES AND CHANNEL SYSTEMS, PIPE LEAD-THROUGHS, CONSTRUCTIONS AND THE LIKE
PROCEDE ET ELEMENT D'ETANCHEITE PERMETTANT D'ETANCHEIFIER DES SYSTEMES DE TUYAUX ET DE CANALISATIONS, PASSAGES DE TUYAUX, OUVRAGES ET EQUIVALENT

(30) Priorität: 28.03.2003 DE 10315801
(43) Veröffentlichungstag der Anmeldung: 28.12.2005
(73) Patentinhaber: PT-POLY-TEC GMBH VERTRIEB UND HERSTELLUNG VON DICHTSYSTEMEN, 65629 Niederneisen (DE)
(72) Erfinder: WEGENER, Eberhard, 15517 Fürstenwalde (DE)
(74) Vertreter: Wablat, Wolfgang
(86) Internationale Anmeldenummer: PCT/DE2004/000628
(87) Internationale Veröffentlichungsnummer: WO 2004/088193

(56) Entgegenhaltungen:
- WO-A-86/02708
- DE-B- 1 214 492
- PATENT ABSTRACTS OF JAPAN Bd. 0081, Nr. 82 (M-319), 22. August 1984 (1984-08-22) & JP 59 073665 A (HAYAKAWA GOMU KK), 25. April 1984 (1984-04-25)

## Beschreibung

Die Erfindung betrifft ein Verfahren zum Abdichten der Ringspalten und Fugen von Rohr- und Kanalsystemen, Rohrdurchführungen und Bauwerken mit einem Dichtungselement aus elastischem Material sowie entsprechende Dichtungselemente.

Zur Abdichtung der Ringspalte von im Rohrleitungs- und Kanalbau aneinandergefügten Rohrabschnitten oder von Rohrdurchführungen oder zur Fugenabdichtung von Bauwerken werden unter anderem auch vorgefertigte Dichtungselemente aus Gummi verwendet. Das gummielastische Dichtungsmaterial legt sich aufgrund seiner elastischen Eigenschaften an die im Ringspalt oder der Fuge gegenüberliegenden Dichtflächen an und sorgt so für die erforderliche Abdichtung. Diese Art der Abdichtung mit einem gummielastischen Dichtungselement ist insofern nachteilig, als der zur Erzielung der erforderlichen Dichtwirkung notwendigen Dimensionierung der Dichtungselemente durch die bei der Montage aufzubringenden Kräfte Grenzen gesetzt sind. Bei einer zu klein bemessenen Dichtung legt diese sich nicht unter ausreichend großer Vorspannung an die Dichtflächen im Dichtspalt an, so dass Abdichtungsprobleme auftreten können. Andererseits ist der Montageaufwand bei einer groß dimensionierten Dichtung hoch und es besteht die Gefahr der Beschädigung des Dichtungselements und einer dadurch bedingten Beeinträchtigung der Dichtwirkung. Schließlich ist es möglich, dass sich die Form des Dichtspaltes aufgrund äußerer Einwirkungen nach der Montage, zum Beispiel infolge von Vortriebskräften, Erd- und Verkehrslasten oder Setzungen, ändert oder das Dichtungselement selbst beschädigt wird. Wenn das Dichtungselement einer dadurch bedingten Vergrößerung des Abstandes zwischen den Dichtflächen nicht folgen kann oder beschädigt wird, kommt es zwangsläufig zu Abdichtungsproblemen.

Aus der DE 26 42 921 ist bereits eine aus einem elastischen Material bestehende Dichtung für Rohrverbindungen, insbesondere Einsteckmuffenverbindungen, bekannt, die einen mit einer Kunststoffmasse gefüllten Hohlraum aufweist. Nach der Montage der Dichtung wird die Kunststoffmasse durch Hinzufügen einer Reaktionskomponente zu der Kunststoffmasse und/oder durch deren Erwärmung vergrößert und verfestigt, so dass ein höherer Anpressdruck erzielt wird und die Dichtung gleichzeitig im Dichtspalt formschlüssig verriegelt wird. Die Wärmezufuhr zu der Kunststoffmasse kann über eine die Kunststoffmasse umschlie-ßende elektrisch leitfähige Kunststoffzwischenschicht, in die elektrische Anschlusselemente eingebettet sind, erfolgen. Dieses Dichtungselement ist insofern nachteilig, als die Zuführung einer Reaktionskomponente von außen oder die Erwärmung durch Stromzufuhr über eine Zwischenschicht mit einem erheblichen Mehraufwand verbunden ist. Zwar kann sich die Dichtung durch die Volumenvergrößerung der Kunststoffmasse enger an die Dichtflächen im Dichtspalt anlegen, jedoch wird die Elastizität des Dichtelements durch den verfestigten Kunststoffkern verschlechtert.

Bei einem in der DE 12 14 492 B beschriebenen Verfahren zum Abdichten zwischen zwei einen Hohlraum umschließenden Teilen wird in die von zwei Nuten gebildete Dichtungskammer ein in der Wärme quellendes und formbares Elastomer eingebracht und bei erhöhter Temperatur ausgeformt. Nach der Herstellung der Dichtung unter Betriebsbedingungen auftretende Undichtigkeiten können nachträglich nicht beseitigt werden. Die Merkmale des Oberbegriffs des Anspruchs 1 und 6 sind aus DE 12 144 92B bekannt.

Der Erfindung liegt die Aufgabe zugrunde, ein Verfahren zum Abdichten von Ringspalten und Fugen bei Rohr- und Kanalsystemen, Rohrdurchführungen oder -anschlüssen, Bauwerken und dgl. anzugeben und entsprechende Dichtungselemente so auszubilden, dass mit geringem Aufwand und ohne Beschädigung der Dichtungselemente eine einfache Montage und einer sichere Abdichtung gewährleistet ist.

Erfindungsgemäß wird die Aufgabe mit einem im Anspruch 1 wiedergegebenen Verfahren und einem gemäß den Merkmalen des Patentanspruchs 6 ausgebildeten Dichtungselement gelöst.

Der Grundgedanke der Erfindung besteht darin, dass die Dichtspaltabdichtung unter Verwendung eines vor der endgültigen Ausbildung des Dichtspaltes noch nicht vulkanisierten bzw. noch nicht aktivierten treibmittelhaltigen Gummi- oder Kunststoffmaterialstranges, der werkseitig oder bei der Montage oder in manchen Fällen auch nach der Montage in nicht geweitetem Zustand im Dichtspalt positioniert wird, erfolgt. Erst wenn nach der Montage und nach den verschiedensten äußeren Einwirkungen auf die Rohrleitung oder das Bauwerk keine Kräfte mehr auf das Dichtungselement wirken bzw. die endgültige Form des Dichtspaltes feststeht, wird das treibmittelhaltige Gummi- oder Kunststoffmaterial durch Wärmezufuhr vulkanisiert bzw. aktiviert, um ein größeres Volumen einzunehmen und in den elastischen Zustand überzugehen.

Trotz Maßtoleranzen, nicht exakter Montage oder Verschiebung des Dichtelements während der Montage von Rohrleitungen und Bauwerken, Änderung der Dichtspaltform durch unterschiedlichste äußere Kraftwirkungen und dergleichen kann sich eine gemäß dem erfindungsgemäßen Verfahren hergestellte Dichtung selbsttätig entsprechend der jeweiligen Dichtspaltform ausbilden und sich gleichmäßig elastisch an die Dichtflächen anlegen, so dass eine sichere Abdichtung gewährleistet ist.

Das Verfahren ist zudem sehr einfach durchzuführen, da der nicht aktivierte oder nicht vulkanisierte Dichtstrang (Aktivierungsstrang) entweder allein oder in einer dehnbaren, wärmeisolierend wirkenden Umhüllung oder in Kombination mit einem elastischen Dichtungsstrang, das heißt, eingebunden oder angelegt an diesen, bereits werkseitig oder vor bzw. während der Montage der Bauteile in üblicher Weise in den Dichtspalt eingebracht wird und später lediglich durch Anlegen einer Niederspannung an ein in den aktivierbaren oder vulkanisierbaren Dichtstrang (Aktivierungsstrang) integriertes Widerstands-Heizelement die Aufweitung und Elastifizierung des Aktivierungsstranges durchgeführt wird, so dass dieser oder das mit diesem verbundene Dichtungselement in dem Dichtspalt elastisch ausgeformt wird.

Gemäß einem weiteren wichtigen Verfahrensmerkmal können auch mehrere aus oder zusammen mit dem Aktivierungsstrang gebildete Dichtungselemente so aneinandergereiht werden, dass sich die vulkanisierbaren/aktivierbaren Aktivierungsstränge berühren und bei Erwärmung mittels der Widerstandsheizelemente miteinander verbunden werden. Auf diese Weise wird eine große, einstückige Dichtung hergestellt, die sich zudem homogen in den jeweiligen Dichtspalt einpasst.

Das erfindungsgemäße Dichtungselement umfasst mindestens einen Aktivierungsstrang, der aus einem treibmittelhaltigen, vulkanisierbaren Gummi oder einer Gummimischung bzw. aus einem treibmittelhaltigen aktivierbaren Kunststoff oder einer Kunststoffmischung besteht und der unter Wärmeeinfluss aktiviert wird, um sich auszudehnen und elastische Eigenschaften anzunehmen. Der Aktivierungsstrang kann jedes gewünschte Profil aufweisen. Er kann mit einer dehnbaren Umhüllung versehen sein und einzeln oder in Kombination mit einem elastischen Dichtungsstrang verwendet werden und in diesen ganz oder teilweise integriert oder an diesen angelegt sein. Es können auch mehrere Aktivierungsstränge in Kombination mit einem elastischen Dichtstrang zu einem erfindungsgemäßen Dichtelement kombiniert sein.

Zur Erzielung der auf den Aktivierungsstrang ausgeübten Wärmewirkung ist in diesen mindesten ein Widerstands-Heizelement eingebunden, dessen nach außen weisende Enden an eine Spannungsquelle angeschlossen werden können. Selbstverständlich können auch mehrere Widerstandselemente des gleichen oder verschiedener Dichtungselemente(s) an die Spannungsquelle angeschlossen werden. Gemäß einem weiteren Erfindungsmerkmal sind die Aktivierungsstränge oder die mit diesen gebildeten Dichtungselemente als aneinander fügbare Dichtungssegmente ausgebildet, deren Aktivierungsstränge und Widerstands-Heizelemente in montiertem Zustand einander berühren und aufgrund der Wärmewirkung zu einem großen einstückigen Dichtungselement verschmelzen.

Ausführungsbeispiele der Erfindung werden anhand der Zeichnung näher erläutert. Es zeigen:
- Fig. 1a/b: eine Schnittansicht eines Dichtungselements mit innenliegendem Aktivierungsstrang und diesen ringförmig umgebendem(r) elastischem Dichtungsstrang bzw. dehnbarer Hülle;
- Fig. 2: eine Schnittansicht eines Dichtungselements, das zwei im Winkel zueinander angeordnete Dichtungsschenkel mit zwischen diesen positioniertem Aktivierungsstrang umfasst;
- Fig. 3: eine Schnittansicht eines im Querschnitt langgestreckten Dichtungselements mit in einen Seitenabschnitt des Dichtungsstrangs eingebundenem Aktivierungsstrang;
- Fig. 4: eine Schnittansicht eines zwischen zwei Dichtflächen angeordneten Dichtungselements, bestehend aus einem Dichtungsstrang mit in einer Nut untergelegtem Aktivierungsstrang;
- Fig. 5: das Dichtungselement nach Fig. 3, jedoch in geschlitzter Ausführung und mit in den Dichtungsstrang integriertem Aktivierungsstrang;
- Fig. 6: eine Schnittansicht eines in einem Dichtspalt angeordneten Dichtungselements, bestehend aus einem Aktivierungsstrang;
- Fig. 7-: eine Schnittansicht des in einem Dichtspalt werkseitig angeordneten langgestreckten Dichtungselements nach Fig. 3, jedoch mit mehreren in den elastischen Dichtstrang integrierten Aktivierungssträngen;
- Fig. 8: eine Schnittansicht eines in einen Wanddurchbruch abdichtend eingesetzten Rohrstutzens;
- Fig. 9: eine Schnittansicht einer großen Muffenverbindung mit einem aus mehren Dichtungssegmenten einstückig aneinandergefügten Dichtungselement;
- Fig. 10: eine detaillierte Ansicht eines Dichtungssystem zwischen zwei stirnseitig aneinanderstoßenden Vortriebsrohren;
- Fig. 11: eine Seitenansicht einer aus mehreren Rohrsegmenten zusammengesetzten Rohrleitung mit nachträglich in den Muffenverbindungen aktivierten Aktivierungssträngen der Dichtungselemente; und
- Fig. 12: eine Schnittansicht einer Fugendichtung mit durch nachträgliche Vulkanisation verbundenen Stoßkanten.

Vor dem Einbringen in einen Dichtungsspalt 4 umfasst ein Dichtungselement 3 mindestens einen Aktivierungsstrang 1 aus einer zunächst nicht vulkanisierten, aber unter Wärmeeinwirkung vulkanisierbaren (aktivierbaren), treibmittelhaltigen Gummimischung, die zusätzlich mit einem weiteren, durch Wärme aktivierbaren Treibmittel versehen sein kann und in die in Längsrichtung des Aktivierungsstranges 1 ein langgestrecktes Widerstands-Heizelement 2 in Form eines Drahtes, eines Bandes, einer Heizwendel oder dgl. eingebettet ist. Die beiden Enden des Widerstands-Heizelements 2 sind in jedem Fall soweit aus dem Aktivierungsstrang 1 bzw. dem Dichtungselement 3 herausgeführt, dass an diese eine Niederspannungsquelle (nicht dargestellt) angeschlossen werden kann bzw. eine Mehrzahl langgestreckter Dichtungssegmente 5 stirnseitig auch über die Heizelemente 2 miteinander verbunden werden kann. Das Dichtungselement 3 kann langgestreckt oder als geschlossene Schleife vorgeformt sein oder mehrere Dichtungssegmente 5 können über den Aktivierungsstrang zu einem langgestreckten oder im Wesentlichen ringförmigen Dichtungselement 3 verbunden werden. Ausgehend von dieser aus Aktivierungsstrang 1 und Widerstands-Heizelement 2 bestehenden Grundausführung, in der nur der Aktivierungsstrang 1 zur Abdichtung verwendet wird, kann der Aktivierungsstrang 1 am Umfang auch von einer flexiblen Hülle 6 oder einem dehnbaren Schlauch umgeben oder in einen elastischen Dichtungsstrang 7, zum Beispiel aus Gummi, eingebettet sein sowie in einer Vielzahl weiterer Ausführungsvarianten und Querschnittsformen ausgebildet werden.

Das Dichtungselement 3 mit dem noch nicht vulkanisierten Aktivierungsstrang 1 wird bereits bei der Herstellung der abzudichtenden Bauteile 8 oder vor bzw. während der Montage an dem Bauteil angebracht oder in den betreffenden Dichtspalt 4 eingebracht. Nach der Montage wird der Aktivierungsstrang 1 durch Anlegen einer Niederspannung an die Enden der Widerstands-Heizelemente 2 erwärmt und dadurch die Gummimischung vulkanisiert und das vorhandene Treibmittel zur Porenbildung in der Gummimischung freigesetzt. Das Dichtungselement 3, das aufgrund seiner noch geringen Größe während der Montage nicht beschädigt wurde, ist danach hochelastisch und an die endgültige Dichtspaltform angepasst und legt sich homogen abdichtend an die Dichtflächen 4a des Dichtspaltes 4 an.

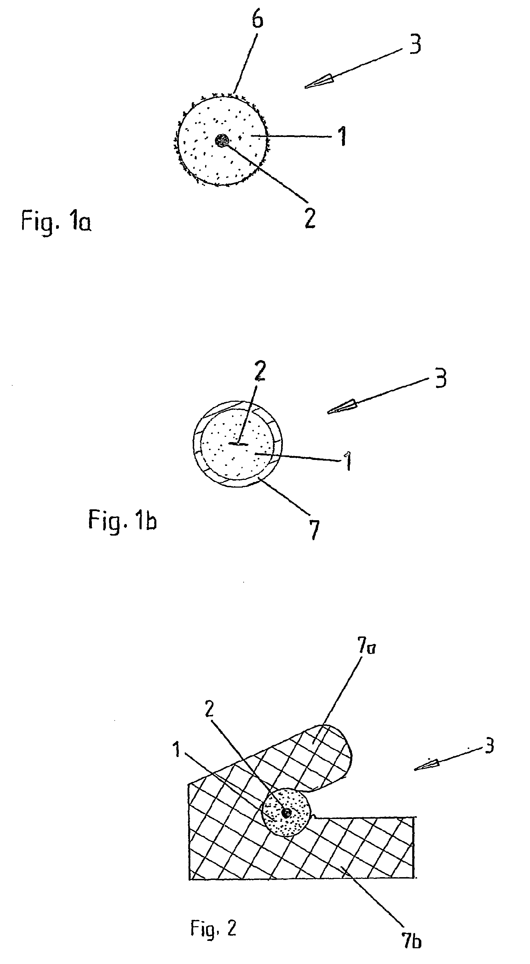

Gemäß Fig. 1b ist ein im Querschnitt runder Aktivierungsstrang 1 mit in diesen eingebettetem Widerstands-Heizelement 2 von einem ringförmigen Dichtungsstrang 7 aus einem elastischen Dichtungsmaterial, hier Gummi, umgeben. Der Aktivierungsstrang kann aber auch, wie Fig. 1a zeigt, nur mit einem dehnbaren Material 6 umhüllt sein und so allein oder in Kombination mit einem Dichtungselement 3 benutzt werden.

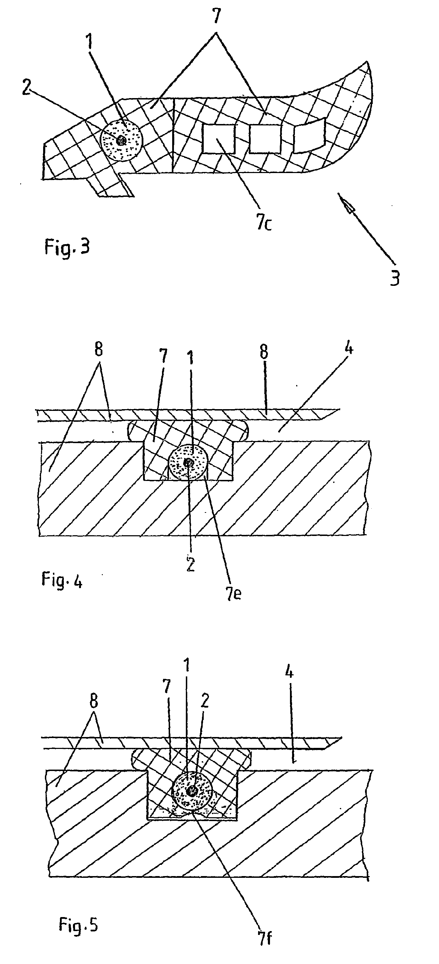

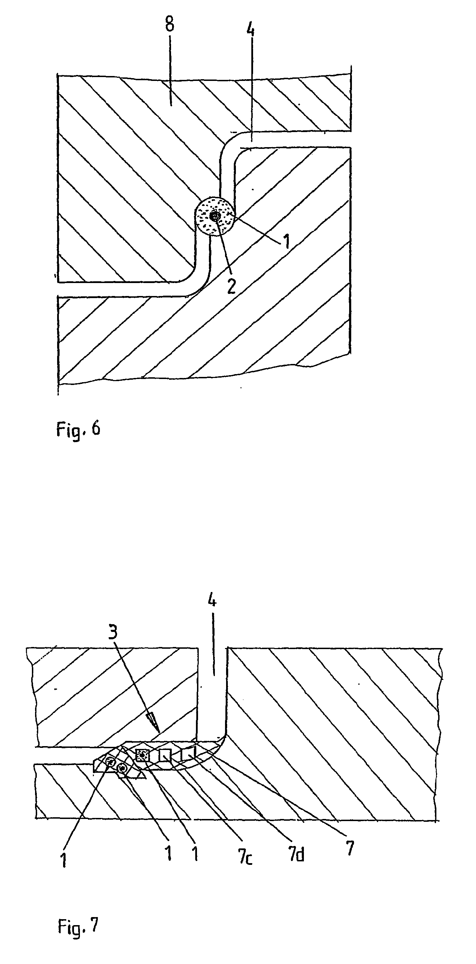

Bei einer anderen, in Fig. 2 wiedergegebenen Ausführungsform eines Dichtungselements 3, bei der der Dichtstrang 7 zwei im Winkel zueinander angeordnete Schenkel 7a, 7b aufweist, ist der Aktivierungsstrang 1 zwischen den beiden Schenkeln positioniert, um nach der Aktivierung deren elastische Eigenschaften insgesamt zu verbessern. Das in Fig. 3 gezeigte, im Querschnitt langgestreckte Dichtungselement 3 ist bereits werkseitig in das betreffende Bauteil 8 integriert worden und weist lediglich in einem seitlichen Bereich seiner Querschnittsfläche einen eingebetteten Aktivierungsstrang 1 auf, während in dem anderen Teil des Dichtungsstranges 7 Hohlräume 7c, 7d vorgesehen sind. Fig. 7 zeigt ein ähnlich ausgebildetes Dichtungselement 3 in dem Dichtspalt 4 einer Rohrverbindung. In diesem Fall sind insgesamt drei Aktivierungsstränge 1 mit jeweils einem Widerstands-Heizelement 2 eingebettet. Gemäß der in Fig. 4 gezeigten Ausführungsform ist der Aktivierungsstrang 1 an einer Außenfläche des Dichtstranges 7 in einer Nut 7e angeordnet, während der Aktivierungsstrang 1 nach Fig. 5 über einen Schlitz 7f in den Dichtstrang 7 eingebunden ist. Bei der in Fig. 6 gezeigten Rohrverbindung ist in dem zwischen den beiden Bauteilen 8 gebildeten Dichtspalt 4 lediglich ein Aktivierungsstrang 1 mit einer Hülle 6, jedoch ohne Dichtstrang 7 angeordnet.

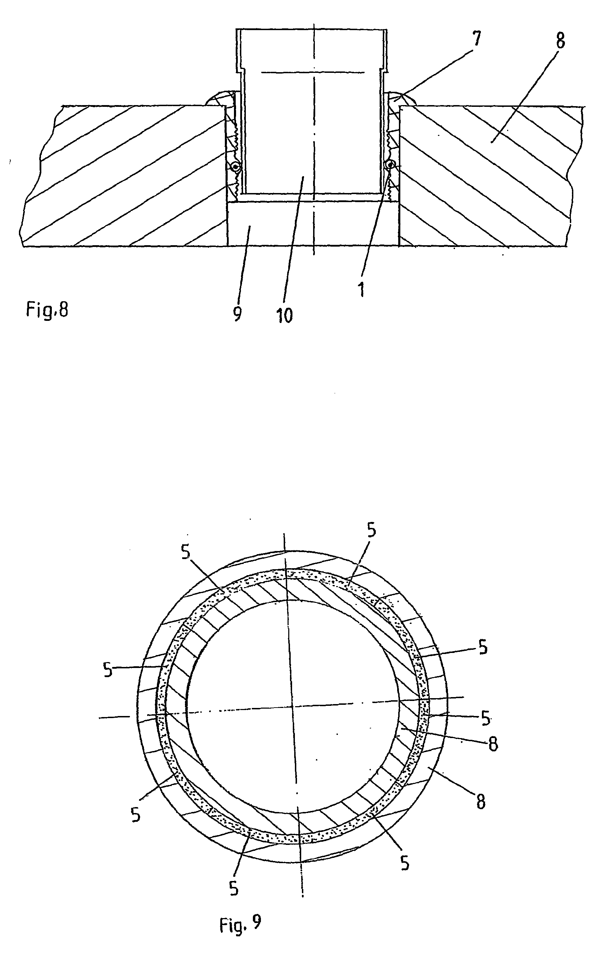

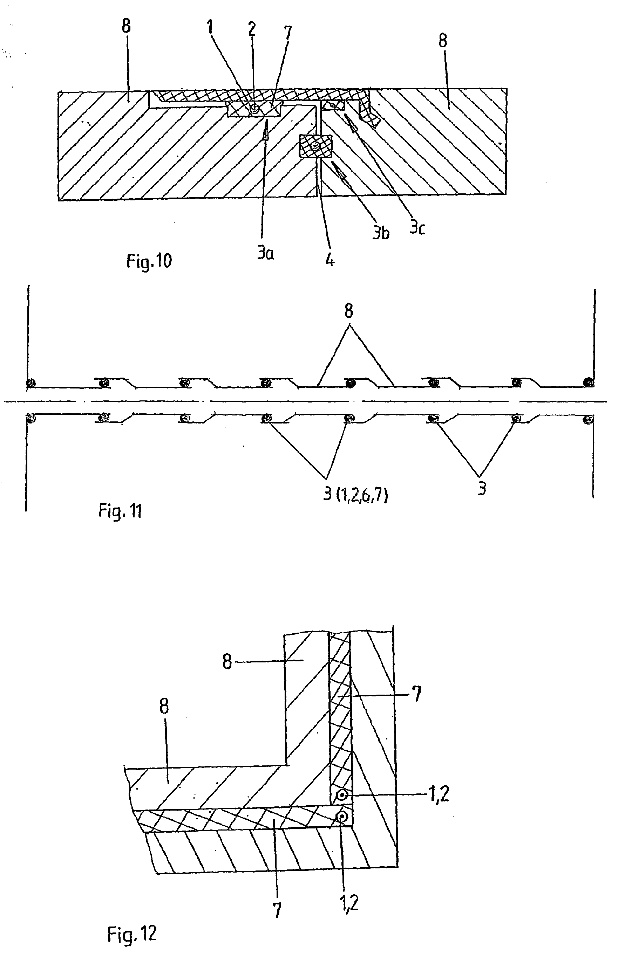

In Fig. 8 ist ein Anwendungsbeispiel gezeigt, wonach ein Rohrstutzen 10 mit Hilfe eines erfindungsgemäßen Dichtungselements 3 abdichtend in eine Rohrwandbohrung 9 eingesetzt ist. Einen anderen Anwendungsfall zeigt Fig. 12, wonach zwei jeweils aus einem langgestreckten Aktivierungsstrang 1 mit eingebettetem Widerstands-Heizelement 2 bestehende Dichtungselemente 3 in winklig zueinander verlaufenden Fugen 4 von Bauteilen 8 untergebracht sind und durch Anlegen einer Niederspannung an den freien Enden der Widerstands-Heizelemente 2 aktiviert werden, wobei die Aktivierungsstränge 1 in dem Dichtspalt 4 nicht nur ihre elastischen Eigenschaften erhalten, sondern an den aneinander stoßenden Flächen, an denen die beiden Widerstands-Heizelemente 2 miteinander in Kontakt stehen, auch dicht miteinander verbunden werden.

Einen weiteren Anwendungsfall zur Herstellung eines ringförmigen Dichtungselements 3 mit sehr großem Durchmesser zeigt Fig. 9. Danach werden in dem Dichtspalt 4 zwischen einem Innenrohr und einem Außenrohr mehrere Dichtungssegmente 5, deren Aktivierungsstränge 1 und Widerstands-Heizelemente 2 stirnseitig aneinander stoßen, eingelegt. Nach Anlegen der Niederspannung an den Heizdraht 2 und die dadurch bedingte Wärmeerzeugung werden die einzelnen Aktivierungsstränge 1 durch Vulkanisation und Austreiben des Treibmittels elastisch ausgebildet und geweitet und gleichzeitig an den Stirnseiten miteinander verschmolzen, so dass nach der Montage innerhalb des Dichtspaltes 4 ein einstückiges ringförmiges Dichtungselement 3 mit hoher Dichtwirkung angeordnet ist.

Ein weiterer beispielhafter Anwendungsfall ergibt sich aus den Figuren 10 und 11 bei einer zwischen zwei Schächten vorgetriebenen Rohrleitung. Zwischen zwei stirnseitig benachbarten Rohren sind eine Primärdichtung 3a, eine Sekundärdichtung 3b und eine Manschettendichtung 3c während des Vortriebs in nicht aktiviertem Zustand angeordnet. Erst nach dem Vortrieb und der dabei durch die herrschenden großen Kräfte möglichen Beschädigung der Dichtungselemente 3a bis 3c und Änderung der Dichtspaltform werden diese in der endgültigen Ausbildung des Dichtspaltes 4 aktiviert. Selbstverständlich kann auch, beispielsweise bei der in Fig. 11 gezeigten Rohrleitung, eine spätere Aktivierung einzelner oder aller Dichtungselemente 3 erfolgen, wenn während der Benutzung aufgrund von Setzungen, Verkehrslasten und dgl. Änderungen der Dichtspaltform und damit verbundene Undichtheiten auftreten.

### Bezugszeichenliste

- 1: Aktivierungsstrang
- 2: Widerstands-Heizelement
- 3: Dichtungselement
- 3a: Primärdichtung
- 3b: Sekundärdichtung
- 3c: Manschettendichtung
- 4: Dichtspalt
- 4a: Dichtfläche
- 5: Dichtungssegment
- 6: Hülle/Schlauch
- 7: Dichtstrang
- 7a, b: Schenkel von 7
- 7c, d: Hohlräume von 7
- 7e: Nut von 7
- 7f: Schlitz von 7
- 8: Rohr, Rohrsegment, Bauteil
- 9: Rohrwandbohrung
- 10: Rohrstutzen

## Patentansprüche

1. Verfahren zum Abdichten der Dichtspalte von Rohr- und Kanalsystemen, Rohrdurchführungen, Bauwerken und dgl. mit einem in den Dichtspalt (4) eingelegten Dichtungselement (3), das aus mindestens einem treibmittelhaltigen, nicht vulkanisierten Gummimaterialstrang oder einem aktivierbaren treibmittelhaltigen Kunststoffmaterialstrang besteht und das durch Wärmezufuhr entsprechend der sich nach der Montage jeweils einstellenden Dichtspaltweite und -form aufgeweitet wird, **dadurch gekennzeichnet, dass** das Dichtungselement (3) bei sich entsprechend den Betriebsbedingungen ändernder Spaltform wiederholt nachgeweitet wird.

2. Verfahren nach Anspruch 1, **dadurch gekennzeichnet, dass** mehrere einzelne Dichtungssegmente (5) in dem Dichtspalt (4) so aneinandergereiht werden, dass sie sich im Bereich des aktivierbaren Gummi- oder Kunststoffmaterialstranges (1) berühren und während der Wärmezufuhr miteinander verbunden werden.

3. Verfahren nach Anspruch 1 oder 2, **dadurch gekennzeichnet, dass** die Wärmezufuhr unter Verwendung von Niederspannung mit einer in den aktivierbaren Gummi- oder Kunststoffmaterialstrang eingebundenen Widerstands-Heizung erfolgt.

4. Verfahren nach Anspruch 3, **dadurch gekennzeichnet, dass** die Niederspannungszufuhr gleichzeitig zu mehreren Dichtungselementen eines Rohrstranges erfolgt.

5. Verfahren nach Anspruch 1 oder 2, **dadurch gekennzeichnet, dass** die Wärmeerzeugung mit Hilfe von Mikrowellenenergie erfolgt.

6. Dichtungselement zur Durchführung des Verfahrens nach Anspruch 1, bestehend aus mindestens einem Aktivierungsstrang (1), der sich im Dichtspalt (4) unter Wärmeeinwirkung ausdehnt und elastische Eigenschaften annimmt, **dadurch gekennzeichnet, dass** der Aktivierungsstrang (1) in eine dehnbare Hülle (6) oder ganz oder teilweise in einen Dichtungsstrang (7) aus gummielastischem Material eingebettet ist.

7. Dichtungselement nach Anspruch 6, **dadurch gekennzeichnet, dass** der Aktivierungsstrang (1) aus einem treibmittelhaltigen, vulkanisierbaren Gummimaterial besteht.

8. Dichtungselement nach Anspruch 6, **dadurch gekennzeichnet, dass** der Aktivierungsstrang (1) aus einem durch Wärmeeinwirkung aktivierbaren, treibmittelhaltigen Kunststoffmaterial besteht.

9. Dichtungselement nach einem der Ansprüche 6 bis 8, **dadurch gekennzeichnet, dass** in den Aktivierungsstrang (1) mindestens ein sich in dessen Längsrichtung erstreckendes Widerstands-Heizelement (2) eingebettet ist, dessen Enden beidseitig aus dem Aktivierungsstrang herausragen und an eine Niederspannungsquelle anschließbar sind.

10. Dichtungselement nach Anspruch 9, **dadurch gekennzeichnet dass** mehrere Widerstands-Heizelemente (2) gleichzeitig oder getrennt an die Niederspannungsquelle anschließbar sind.

11. Dichtungselement nach einem der Ansprüche 6 bis 10, **dadurch gekennzeichnet, dass** es aus mehreren stirnseitig und mit den Enden der Widerstands-Heizelemente (2) einander berührenden Dichtungssegmenten (5) aufgebaut ist, wobei die Stirnseiten der Aktivierungsstränge durch Wärmeeinwirkung unter Bildung eines einstückigen Dichtungselements (3) miteinander verschmolzen sind.

12. Dichtungselement nach Anspruch 6, **dadurch gekennzeichnet, dass** die Hülle (6) aus einem wärmeisolierenden Material besteht.

13. Dichtungselement nach Anspruch 6, **dadurch gekennzeichnet, dass** der Aktivierungsstrang (1) in einen Hohlraum und/oder in eine Nut des Dichtungsstranges (7) eingelegt und/oder von außen an den Dichtungsstrang (7) angelegt ist.

## Claims

1. A method for sealing the sealing gaps of pipes and channel systems, pipe lead-throughs, constructions, and the like using a sealing element (3) that is inserted into the sealing gap (4) and consists of a blowing agent-containing unvulcanized rubber material strand or of an activable blowing agent-containing plastic material strand and is expanded through heat input to the sealing gap width and shape achieved after assembly, **characterized in that** said sealing element (3) being repeatedly re-expanded if the shape of said gap changes due to operating conditions.

2. The method according to claim 1, **characterized in that** multiple individual sealing elements (5) are lined up in the sealing gap (4) in such a way that they abut in the area of the activable rubber or plastic material strand (1) and are bonded together during heat input.

3. The method according to claim 1 or 2, **characterized in that** said heat is supplied, using low voltage, by a resistance heater embedded into said activable rubber or plastic material strand.

4. The method according to claim 3, **characterized in that** low voltage is simultaneously supplied to multiple sealing elements of a pipeline.

5. The method according to claim 1 or 2, **characterized in that** said heat is supplied using microwave energy.

6. A sealing element for carrying out the method according to claim 1, consisting of at least one activation strand (1) that expands in the sealing gap (4) and assumes elastic characteristics when heat is applied, **characterized in that** said activation strand (1) is embedded in an expandable sheath (6) or is fully or partially embedded in a sealing strand (7) made of rubber-elastic material.

7. The sealing element according to claim 6, **characterized in that** said activation strand (1) consists of a blowing agent-containing vulcanizable rubber material.

8. The sealing element according to claim 6, **characterized in that** said activation strand (1) consists of a blowing agent-containing plastic material that can be activated by supplying heat.

9. The sealing element according to claims 6 through 8, **characterized in that** at least one resistance heating element (2) stretching in longitudinal direction is embedded in said activation strand (1), and that both ends of said heating element protrude from the activation strand and can be connected to a low-voltage source.

10. The sealing element according to claim 9, **characterized in that** multiple resistance heating elements (2) can simultaneously and separately be connected to the low voltage source.

11. The sealing element according to any one of claims 6 through 10, **characterized in that** it is composed of multiple sealing segments (5) that abut at their front ends and with said resistance heating elements (2), the front ends of said activation strands being bonded together by heat input to form a one-piece sealing element (3).

12. The sealing element according to claim 6, **characterized in that** said sheath (6) consists of a heat-insulating material.

13. The sealing element according to claim 6, **characterized in that** said activation strand (1) is inserted in a void and/or a groove of the sealing strand (7) and/or placed against said sealing strand (7) from outside.

## Revendications

1. Procédé pour étancher des intervalles à étancher dans des systèmes de tubes et de canalisations, des traversées de tubes, des constructions et similaires, comprenant un élément d'étanchement (3) mis en place dans l'intervalle à étancher (4), constitué par au moins un brin de matériau à base de caoutchouc non vulcanisé contenant un agent gonflant ou un brin de matière plastique contenant un agent gonflant susceptible d'être activé, et qui est élargi par apport de chaleur en correspondance de la largeur et de la forme de l'intervalle à étancher qui se produit respectivement après le montage, **caractérisé en ce que** l'élément d'étanchement (3) est réélargi de façon répétée lorsque la forme de l'intervalle se modifie en fonction des conditions de service.

2. Procédé selon la revendication 1, **caractérisé en ce que** plusieurs segments d'étanchement individuel (5) sont placés en rangée dans l'intervalle à étancher (4) de telle manière qu'ils se touchent dans la zone du brin de matériau à base de caoutchouc ou de matière plastique susceptible d'être activé (1) et sont reliés les uns aux autres pendant l'apport de chaleur.

3. Procédé selon la revendication 1 ou 2, **caractérisé en ce que** l'apport de chaleur a lieu en utilisant une basse tension avec un chauffage résistif intégré dans le brin de matériau à base de caoutchouc ou de matière plastique susceptible d'être activé.

4. Procédé selon la revendication 3, **caractérisé en ce que** l'application de basse tension a lieu simultanément vers plusieurs éléments d'étanchement d'une ligne de tubes.

5. Procédé selon la revendication 1 ou 2, **caractérisé en ce que** la génération de chaleur a lieu à l'aide d'énergie à micro-ondes.

6. Élément d'étanchéité pour mettre en oeuvre le procédé selon la revendication 1, comprenant au moins un brin à activer (1), qui se dilate sous apport de chaleur dans l'intervalle à étancher (4) et qui adopte des propriétés élastiques, **caractérisé en ce que** le brin à activer (1) est noyé dans une enveloppe extensible (6) ou est noyé totalement ou partiellement dans un brin d'étanchement (7) en matériau à base de caoutchouc.

7. Élément d'étanchéité selon la revendication 6, **caractérisé en ce que** le brin à activer (1) est en un matériau à base de caoutchouc susceptible d'être vulcanisé contenant un agent gonflant.

8. Élément d'étanchéité selon la revendication 6, **caractérisé en ce que** le brin à activer (1) est en une matière plastique contenant un agent gonflant et susceptible d'être activée par application de chaleur.

9. Élément d'étanchéité selon l'une des revendications 6 à 8, **caractérisé en ce que** dans le brin à activer (1) est noyé au moins un élément chauffant résistif (2) qui s'étend dans sa direction longitudinale et dont les extrémités dépassent des deux côtés hors du brin à activer pour être branchées à une source de basse tension.

10. Élément d'étanchéité selon la revendication 9, **caractérisé en ce que** plusieurs éléments chauffants résistifs (2) peuvent être branchés simultanément ou séparément à la source de basse tension.

11. Élément d'étanchéité selon la revendication l'une des revendications 6 à 10, **caractérisé en ce qu'**il est composé de plusieurs éléments d'étanchement (5) agencés du côté frontal et se touchant mutuellement par les extrémités des éléments chauffants résistifs (2), les côtés frontaux des brins à activer étant fusionnés ensemble par application de chaleur en formant un élément d'étanchement monobloc (3).

12. Élément d'étanchéité selon la revendication 6, **caractérisé en ce que** l'enveloppe (6) est en un matériau thermiquement isolant.

13. Élément d'étanchéité selon la revendication 6, **caractérisé en ce que** le brin à activer (1) est mis en place dans une cavité et/ou dans une rainure du brin d'étanchement (7) et/ou est appliqué de l'extérieur sur le brin d'étanchement (7).
